# EUROPÄISCHE PATENTSCHRIFT

(11) **EP 0 772 990 B1**
(45) Veröffentlichungstag und Bekanntmachung des Hinweises auf die Patenterteilung: **12.05.1999**
(21) Anmeldenummer: 96117197.2
(22) Anmeldetag: 25.10.1996
(51) Int. Cl.: A47J 27/62

(54) **Sensorgesteuerte Garungseinheit**
Sensor controlled cooking unit
Ensemble de cuisson commandé par un capteur

(30) Priorität: 08.11.1995 DE 29517713 U
(43) Veröffentlichungstag der Anmeldung: 14.05.1997
(73) Patentinhaber: BSH Bosch und Siemens Hausgeräte GmbH, 81669 München (DE)
(72) Erfinder: Has, Uwe, Dipl.-Ing., 84579 Unterneukirchen (DE); Friedrich, Jürgen, Dipl.-Ing., 91726 Gerolfingen (DE); Siebert, Thomas, Dipl.-Ing. (FH), 84137 Vilsbiburg (DE)

(56) Entgegenhaltungen:
- DE-A- 3 410 465
- DE-A- 4 413 979
- DE-C- 3 341 234
- DE-C- 3 538 353
- DE-C- 3 811 925
- DE-U- 9 416 779

## Beschreibung

Die Erfindung bezieht sich auf eine sensorgesteuerte Garungseinheit, bestehend aus einem Gargerät, einem Sensor, einem Kochfeld, wobei die Sensorik einen Infrarotsensor betrifft, der kochstellenbezogen oberhalb des Kochfeldes angeordnet ist, und wobei das Gargerät, beispielsweise ein Topf, mit dem Kochfeld systemhaft verbunden ist und auf die Kochfeldeigenschaften hin angepaßt ist.

Eine sensorgesteuerte Garungseinheit, beispielsweise als Glaskeramik-Kochstelleneinheit, die sensorgesteuert ist, ausgeführt, ist in dem deutschen Gebrauchsmuster DE-U-94 16 779 beschrieben. Dabei handelt es sich um eine sensorgesteuerte Glaskeramik-Kochstelleneinheit, bestehend aus einem infrarotsensortauglichen Gargerät, einer Glaskeramik-Kochfläche und einer unter der Glaskeramik-Kochfläche angeordneten Strahlungsheizquelle, wobei das Gargerät mit einem elektronischen Zusatzgerät auf Infrarotbasis korrespondiert, das Zusatzgerät mittels Infrarotsender und Infrarotempfänger mit einer Kochmuldenelektronik Kochdaten austauscht und als Folge davon eine Strahlungsheizung mit kochprozeßnahen Leistungszuschaltungen durch die Kochmuldenelektronik steuerbar ist.

Die Aufgabe der Erfindung besteht nunmehr darin, eine sensorgesteuerte Garungseinheit als sensorgesteuertes System von Kochfeld und Gargerät aufzufassen, und einen auf die Kochstellensensorik und Elektronik angepaßten Systemtopf zu definieren, der die Vorteile einer sensorgesteuerten Garungseinheit umsetzt.

Die erfindungsgemäße Anordnung zur Lösung dieser Aufgabe ist dadurch gekennzeichnet, daß daß der Emissionsfaktor für den Systemtopf im Wellenlängenbereich der Infrarotstrahlung von µm > > 14 µm optimiert ist und nahezu den Wert 1 besitzt, daß das Gargerät als Systemtopf im Topfwand-Dickenbereich von 1 bis 2,4 mm liegt, daß das Gargerät als Systemtopf einen Topfboden-Dickenbereich von mindestens 2 mm einhält, und daß das Gargerät als Systemtopf eine wasserfilmtragende Kontaktstelle zwischen Topfdeckel und Topfrand besitzt.

Vorteilhafte Ausgestaltungen der Erfindung sind in den Unteransprüchen enthalten. Ein Ausführungsbeispiel nach der Erfindung ist im folgenden anhand der Zeichnung näher beschrieben. Es zeigt:
- Fig. 1: einen Systemtopf,
- Fig. 2: ein erstes Detail des Systemtopfes,
- Fig. 3: ein zweites Detail des Systemtopfes und
- Fig. 4: ein drittes Detail des Systemtopfes.

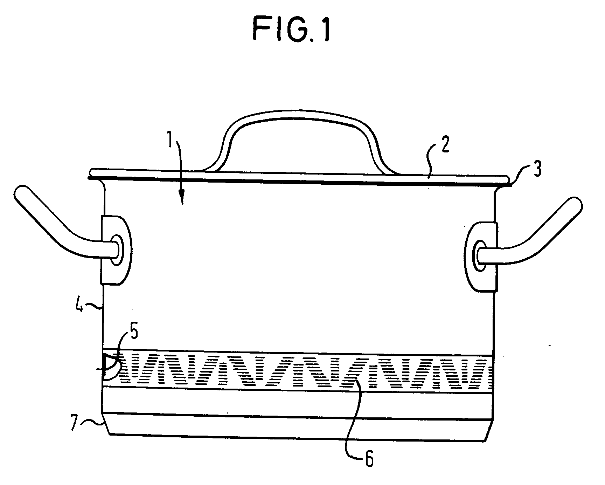

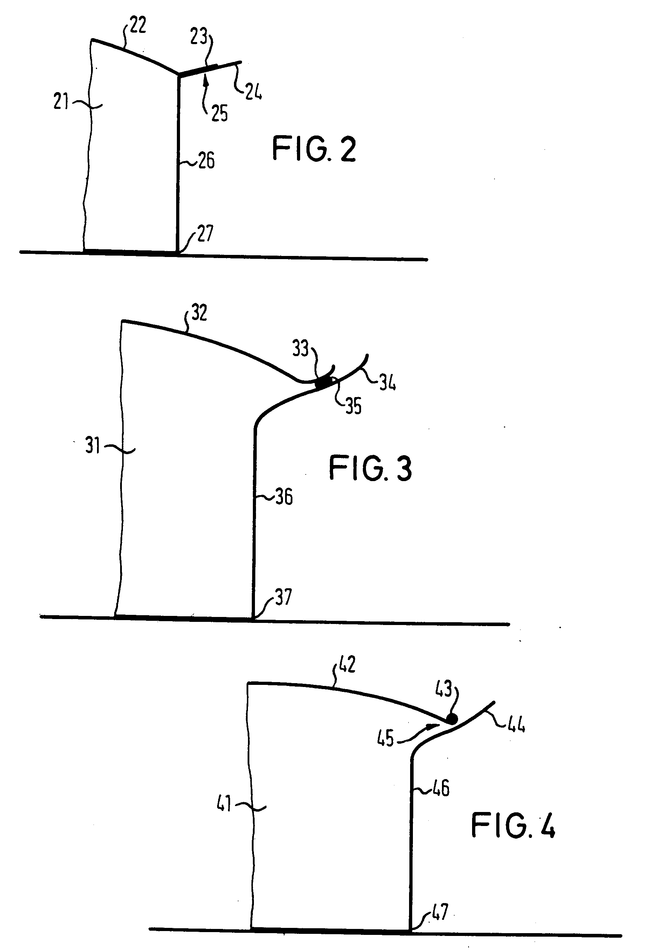

Gemäß Fig. 1 ist ein Systemtopf 1, ein Systemtopfdeckel 2, eine Kontaktstelle 3, eine Systemtopfwand 4, eine Füllstandsmarkierung 5, eine Emailschicht 6 und ein Topfboden 7 dargestellt. Der dargestellte Systemtopf 1 hat vielerlei sehr verschiedene Eigenschaften, die teilweise nur kompromißhaft in einem Topf gemeinsam realisiert werden können.
- Emissionsfaktor der Topfwand.
   In dem Bereich der Topfwand, der vom Infrarotsensor zur Temperaturmessung betrachtet werden kann, sollte die Topfwand einen hohen Infrarot-Emissionsfaktor von nahezu 1 haben. Praktisch wird der erreichbare Wert bei ca. 0,99 liegen. Dieser Emissionsfaktor muß nur in einem Wellenlängenbereich von 8 µm ≦ λ ≦ 14 µm konstant sein. Dies wird dadurch erreicht, daß die Topfwand durch eine Oberfläche aus Email oder geeignete Kunststoffe gebildet wird. Ein Topf, der für das System nicht tauglich erscheint, kann durch eine Beschichtung, beispielsweise mit Folie, Lack oder anderen nachträglich aufgebrachten Mitteln, infrarottauglich ertüchtigt werden. Die Festlegung auf den genannten Bereich des Emissionsfaktors hat den weiteren Vorteil, daß angetrocknete Reste von zufällig an die Topfwand geratenen Lebensmitteln den gleichen Emissionsfaktor haben, wie die beschichtete Topfwand. Eine Verschmutzung der Topfwand kann daher das Ergebnis der Temperaturmessung nicht verfälschen.
- Abstrahlcharakteristik der Topfoberfläche.
   Die Abstrahlcharakteristik der Topfwand muß der eines Lambert-Strahlers (Kosinus-Strahlers) entsprechen. Das bedeutet, daß der Infrarotsensor auch unter einem von 90° abweichenden Winkel auf die betrachtete Topfwand gerichtet sein darf, ohne daß die Funktionsfähigkeit des Systems in Frage gestellt wäre. Konstruktiv bedeutet das, der Infrarotsensor muß nicht genau radial auf den Systemtopf 1 ausgerichtet sein. Damit die Topfoberfläche die Abstrahlcharakteristik eines Lambert-Strahlers hat, muß die Emailoberfläche zumindest im betrachteten Infrarotbereich eine gewisse Welligkeit besitzen. Daher ist es nicht möglich, eine in sich dichte glatte Oberfläche zu erzeugen. Da rauhes Email im Kaushaltbereich schwerlich einsetzbar ist (schwer zu reinigen und daher hygienisch bedenklich), sollte die Emailschicht eine glatte Oberfläche besitzen. Um sie für die Betrachtung des Infrarotsensors als rauh erscheinen zu lassen, wird eine Ausbildung der Emailschicht als Schichtfolge vorgeschlagen. Dabei ist die letzte, dem Benutzer zugewandte Emailschicht relativ glatt und im infraroten Bereich transparent. Die darauf folgende Schicht kann dann beliebig wellig sein. Eine solche transparente Schicht kann dabei auch aus einem einschichtigen Email bestehen, das aufgrund hoher Brenntemperaturen an der Oberfläche transparent verglast ist.
- Dicke der Topfwand.
   Die Topfwand sollte so dünn sein, daß Änderungen in der Lebensmitteltemperatur außen schnellstens bemerkt werden. Andererseits muß aber auch die Topfwand dick genug sein, daß ihre Wärmekapazität ausreicht, um Schwankungen der Lebensmitteltemperatur, die aufgrund der Konvektion im Lebensmittel selbst (besonders in Wasser) zuverlässig ausgemittelt werden. Versuche dazu haben ergeben, daß das am besten mit einer Wanddicke von ca. 1 mm bis 2,4 mm erreichbar ist.
- Erkennung der Füllhöhe.
   Der vom Infrarotsensor betrachtete Meßfleck auf der Topfwand muß auf der Innenseite mit Lebensmittel bedeckt sein, damit die außen gemessene Temperatur der des Lebensmittels entspricht. Die aktuelle Füllhöhe ist für den durchschnittlichen Benutzer nur sehr schwer einschätzbar. An der Topfinnenwand angebrachte Markierungen können dabei nur bedingt hilfreich sein, da sie nur bei geöffnetem Topf sichtbar wären. Daher wird vorgeschlagen, die Beschichtung der Topfaußenwand fit einem Material auszuführen, das seine Farbe abhängig von der Temperatur ändert. Diese gegebenenfalls etwas aufwendigere Prozedur stellt jedoch sicher, daß die Füllhöhe jederzeit von außen problemlos erkannt wird.
- Höhe des Meßfleckes über der Glaskeramik.
   Der Meßfleck muß mindestens 35 mm über der Glaskeramik und nicht im Bereich des Überganges vom Topfboden zur Topfwand angebracht sein. Dies liegt darin begründet, daß ein Topf bei einer Erwärmung beispielsweise auf Induktionsmulden im Topfbodenbereich stark erwärmt werden kann. Da durch einen zu hohen Meßfleck die Mindestfüllmenge des Topfes ansteigt, ergibt sich der obengenannte Kompromiß. Ein Meßfleck kann dabei mit einem minimalen Durchmesser von ca. 10 bis 15 mm realisiert werden. Für eine optimierte Lage der Infrarot-Abstrahlfläche ergibt sich damit auf der Topfwand ein Bereich von ca. 35 bis 50 mm über der Kochfläche.
- Dicke des Topfbodens.
   Der Topfboden eines Systemtopfes 1 muß hinreichend dick sein bzw. eine ausreichende Wärmekapazität haben, um beim Einschalten der Heizung der Kochstelle ein punktuelles Überschwingen der Temperatur zu vermeiden, so daß das Lebensmittel nicht anbrennen oder anhängen kann. Dies wird, wie Versuche bestätigt haben, am besten mit einer Bodendicke ab 2 mm Stärke erreicht.
- Optimale Gestaltung von oberen Topfrand und Topfdeckelrand.
   Gemäß der Figuren 2, 3 und 4 sind Details des Systemtopfes 1 dargestellt, die eine optimierte Gestaltung des oberen Topfrandes unter Einbezug des Topfdeckelrandes vermitteln. Es sind erkennbar die Topfdetailstücke 21, 31 und 41, die Topfdeckel 22, 32 und 42, die Topfdeckelränder 23, 33, 43, die Topfränder 24, 34 und 44, die Kontaktstellen zwischen Deckelrand und Topfrand 25, 35 und 45, die Topfwände 26, 36 und 46 sowie die Topfböden 27, 37 und 47. Aus den Figuren 2 bis 4 ist im wesentlichen entnehmbar, daß die Kontaktstelle von Topfdeckel und Topfrand möglichst so geformt sein sollte, daß nach einem eventuellen dampfdruckbedingten Abheben des Deckels der Deckel von selbst wieder in die ursprüngliche Ausgangslage hingleitet, und somit während des gesamten Garungsvorganges ein gut abschließender Topf voraussetzbar ist. Dies ist insofern durchaus notwendig, da bei nicht gänzlich bis zur Mindestmarkierung gefüllten Topf das abkondensierende Wasser, das als Wasserfilm an der jeweiligen Topfwand auftritt, das System Sensor = Topf funktionsfähig erhält. Der abkondensierte Wasserfilm simuliert nicht vorhandene Füllhöhe, und erlaubt ein temperaturgerechtes Garen. Die dafür notwendige, sichere Funktion und Lage des Topfdeckels wird in vorteilhafter Weise dadurch erreicht, daß der Topfrand entsprechend Figur 2 beispielsweise eine leichte Trichtergestalt hat. Der Topfdeckel gleitet auf einem durch Kondensation entstehenden Wasserfilm stets in die vorgedachte Position zurück. Das bedingt auch keinen kreisrunden Topf, wie vielfach voraussetzungsgemäß angenommen wird. Dabei ist es von Vorteil, daß durch den entstehenden Wasserfilm geringe Ungenauigkeiten in der Passung des Topfdeckels, wie sie durch Fertigungsfehler oder unsachgemäße Behandlung des Kochgeschirrs entstehen können, ausgeglichen werden. Durch eine nach außen hin ansteigende Topfrandausführung wird die Führungskraft auf den Deckel zu seiner Normallage hin vergrößert. Mindestens jedoch sollte der Deckel in einem kleinen umlaufenden Bereich des Deckelrandes flach auf dem Topfrand auflegen, die es gemäß Figur 3 entnehmbar ist. Dadurch wird die Führung des Topfdeckels am Topfrand, also in der Kontaktstelle 35, deutlich verbessert. Ein ähnliches Verhalten kann, wie in Figur 4 dargstellt ist, ein runder Deckelabschluß leisten. Dabei ist die Gleitfähigkeit des Topfdeckelrandes 43 gegenüber einem in der Kontaktstelle 45 entstehenden Wasserfilmes optimal.

Die dargestellten Vorzüge eines Systemtopfes sind für eine sensorgesteuerte Garungseinheit insofern notwendig, als daß durch das Sensorkochen nur mit Hilfe dieser Maßnahme genügend sicher Temperaturkonstanz und sensorgesteuertes Garen ermöglicht wird, wobei sowohl nahrungsmittelgerechtes Garen als auch energiesparendes Garen erfolgreich praktiziert werden kann.

## Patentansprüche

1. Sensorgesteuerte Garungseinheit, bestehend aus einem Gargerät, einer Sensorik, sowie einem Kochfeld, wobei die Sensorik einen Infrarotsensor betrifft, der kochstellenbezogen oberhalb des Kochfeldes angeordnet ist, und wobei das Gargerät, beispielsweise ein Topf (1), mit dem Kochfeld systemhaft verbunden ist und auf die Kochfeldeigenschaften hin angepaßt ist, **dadurch gekennzeichnet,** daß der Emissionsfaktor für den Systemtopf (1) im Wellenlängenbereich der Infrarotstrahlung von 8 µm > > 14 µm optimiert ist und nahezu den Wert 1 besitzt, daß das Gargerät als Systemtopf (1) im Topfwand-Dickenbereich von 1 bis 2,4 mm liegt, daß das Gargerät als Systemtopf (1) einen Topfboden-Dickenbereich von mindestens 2 mm einhält, und daß das Gargerät als Systemtopf (1) eine wasserfilmtragende Kontaktstelle (25, 35, 45) zwischen Topfdeckel (22, 32, 42) und Topfrand (24, 34, 44) besitzt.

2. Sensorgesteuerte Garungseinheit nach Anspruch 1, **dadurch gekennzeichnet**, daß der Systemtopf (1) eine ganzheitliche Emailschicht besitzt, die den Emissionsfaktor von ca. 1 besitzt.

3. Sensorgesteuerte Garungseinheit nach Anspruch 1. **dadurch gekennzeichnet**, daß der Systemtopf (1) eine Emailschicht (6) mit definierter Position, Fläche und Dicke besitzt.

4. Sensorgesteuerte Garungseinheit nach Anspruch 1, 4, **dadurch gekennzeichnet**, daß der Systemtopf (1) einen umlaufenden Emaildekorstreifen (6) von ca. 20 mm Breite besitzt, der zwischen 20 bis 25 mm Höhe von Topfboden (7) her angesetzt ist.

5. Sensorgesteuerte Garungseinheit nach Anspruch 1, 4, **dadurch gekennzeichnet**, daß der Systemtopf (1) eine durch Schichtfolge ausgebildete Emailschicht (6) besitzt, wobei eine wellige Grundschicht von einer infrarottransparenten glatten äußeren Schicht abgedeckt ist.

6. Sensorgesteuerte Garungseinheit nach Anspruch 1, **dadurch gekennzeichnet**, daß der Systemtopf (1) ein speziell ausgeformte Kontaktstelle (3) zwischen Topfdeckel (2) und Topfrand besitzt, so daß auftretender Dampfdruck die Abdecklage nicht verändert.

7. Sensorgesteuerte Garungseinheit nach Anspruch 1, 7, **dadurch gekennzeichnet**, daß der Systemtopf (1) als Kontaktstelle (25) eine Trichtergestalt aufweist.

8. Sensorgesteuerte Garungseinheit nach Anspruch 1, 7, **dadurch gekennzeichnet**, daß der Systemtopf (1) an der Kontaktstelle (35) in einem kleinen umlaufenden Bereich des Deckelrandes (33) flach auf dem auslaufenden Topfrand (34) aufliegt.

9. Sensorgesteuerte Garungseinheit nach Anspruch 1, 7, **dadurch gekennzeichnet**, daß der Systemtopf (1) einen runden, auf dem auslaufenden Topfrand (44) aufsetzenden Deckelverschluß (43) besitzt.

10. Sensorgesteuerte Garungseinheit nach Anspruch 1, **dadurch gekennzeichnet**, daß der Systemtopf (1) eine innere Füllstandsmarkierung (5) besitzt.

11. Sensorgesteuerte Garungseinheit nach Anspruch 1, **dadurch gekennzeichnet**, daß der Systemtopf (1) eine äußere Topfwandbeschichtung besitzt, die ihre Farbe temperaturabhängig verändert.

12. Systemtopf für eine sensorgesteuerte Garungseinheit gemäß Anspruch 1 mit einem Infrarotsensor, **dadurch gekennzeichnet**, daß der Emissionsfaktor für den Systemtopf (1) im Wellenlängenbereich der Infrarotstrahlung von 8 µm > > 14 µm optimiert ist und nahezu den Wert 1 besitzt, daß das Gargerät als Systemtopf (1) im Topfwand-Dickenbereich von 1 bis 2,4 mm liegt, daß das Gargerät als Systemtopf (1) einen Topfboden-Dickenbereich von mindestens 2 mm einhält, und daß das Gargerät als Systemtopf (1) eine wasserfilmtragende Kontaktstelle (25, 35, 45) zwischen Topfdeckel (22, 32, 42) und Topfrand (24, 34, 44) besitzt.

## Claims

1. Sensor-controlled cooking unit consisting of a cooking apparatus, a sensor system as well as a cooking field, wherein the sensor system is an infrared sensor which is arranged above the cooking field with respect to the cooking place and wherein the cooking apparatus, for example a pot (1), is connected with the cooking field in terms of system and is matched to the cooking field properties, characterised in that the emission factor for the system pot (1) is optimised in the wavelength range of infrared radiation of 8 micrometres > > 14 micrometres and has almost the value 1, that the cooking apparatus as system pot (1) lies in the pot wall thickness range of 1 to 2.4 millimetres, that the cooking apparatus as system pot (1) has a pot base thickness range of at least 2 millimetres, and that the cooking apparatus as system pot (1) has a water film carrying contact location (25, 35, 45) between pot lid (22, 32, 42) and pot rim (24, 34, 44).

2. Sensor-controlled cooking unit according to claim 1, characterised in that the system pot (1) has an integral enamel layer which has the emission factor of about 1.

3. Sensor-controlled cooking unit according to claim 1, characterised in that the system pot (1) has an enamel layer (6) with defined position, area and thickness.

4. Sensor-controlled cooking unit according to claim 1, 3, characterised in that the system pot (1) has an encircling enamel decorative strip (6) of about 20 millimetres width, which is placed on between 20 to 25 millimetres height from the pot base (7).

5. Sensor-controlled cooking unit according to claim 1, 3, characterised in that the system pot (1) has an enamel layer (6) formed by a layer sequence, wherein a wavy base layer is covered by a smooth outer layer transparent to infrared radiation.

6. Sensor-controlled cooking unit according to claim 1, characterised in that the system pot (1) has a specially shaped contact location (3) between pot lid (2) and pot rim, so that occurring steam pressure does not vary the lid position.

7. Sensor-controlled cooking unit according to claim 1, 6, characterised in that the system pot (1) has as contact place (25) a funnel shape.

8. Sensor-controlled cooking unit according to claim 1, 6, characterised in that the system pot (1) at the contact location (35) rests, in a small encircling region of the lid rim (33), flatly on the outwardly extending pot rim (34).

9. Sensor-controlled cooking unit according to claim 1, 6, characterised in that the system pot (1) has a round lid closure (43) placed on the outwardly extending pot rim (44).

10. Sensor-controlled cooking unit according to claim 1, characterised in that the system pot (1) has an inner filling state marking (5).

11. Sensor-controlled cooking unit according to claim 1, characterised in that the system pot (1) has an outer pot wall coating, which changes its colour in dependence on temperature.

12. System pot for a sensor-controlled cooking unit according to claim 1 with an infrared sensor, characterised in that the emission factor for the system pot (1) is optimised in the wavelength range of infrared radiation of 8 micrometres > > 14 micrometres and has almost the value 1, that the cooking apparatus as system pot (1) lies in the pot wall thickness range of 1 to 2.4 millimetres, that the cooking apparatus as system pot (1) has a pot base thickness range of at least 2 millimetres, and that the cooking apparatus as system pot (1) has a water film carrying contact location (25, 35, 45) between pot lid (22, 32, 42) and pot rim (24, 34, 44).

## Revendications

1. Ensemble de cuisson commandé par un capteur, composé d'un appareil de cuisson, d'un capteur, ainsi que d'une plaque de cuisson, dans lequel le capteur est un capteur à infrarouge qui, par rapport à l'endroit de cuisson, est disposé au-dessus de la plaque de cuisson, et dans lequel l'appareil de cuisson, par exemple une marmite (1), est lié, selon le système, à la plaque de cuisson et est adapté aux propriétés de la plaque de cuisson, caractérisé en ce que le facteur d'émission pour la marmite système (1) est optimisé dans la gamme d'ondes du rayonnement infrarouge de 8 µm > > 14 µm et possède presque la valeur 1, en ce que l'appareil de cuisson comme marmite système (1) se situe dans une gamme d'épaisseurs de paroi de la marmite allant de 1 à 2,4 mm, en ce que l'appareil de cuisson comme marmite système (1) respecte une gamme d'épaisseurs du fond de la marmite d'au moins 2 mm, et en ce que l'appareil de cuisson comme marmite système (1) possède un endroit de contact porteur d'un film d'eau (25, 35, 45) entre le couvercle de la marmite (22, 32, 42) et le bord de la marmite (24, 34, 44).

2. Ensemble de cuisson commandé par un capteur selon la revendication 1, caractérisé en ce que la marmite système (1) possède une couche d'émail intégrale, qui possède le facteur d'émission de 1 environ.

3. Ensemble de cuisson commandé par un capteur selon la revendication 1, caractérisé en ce que la marmite système (1) possède une couche d'émail (6) avec une position, une surface et une épaisseur définies.

4. Ensemble de cuisson commandé par un capteur selon les revendications 1, 3, caractérisé en ce que la marmite système (1) possède une bande décorative circulaire en émail (6) de 20 mm environ de large, qui est appliquée à une hauteur située entre 20 et 25 mm du fond de la marmite (7).

5. Ensemble de cuisson commandé par un capteur selon les revendications 1, 3, caractérisé en ce que la marmite système (1) possède une couche d'émail (6) constituée d'une suite de couches, dans lequel une couche de base ondulée est recouverte d'une couche externe lisse translucide aux rayons infrarouges.

6. Ensemble de cuisson commandé par un capteur selon la revendication 1, caractérisé en ce que la marmite système (1) possède un endroit de contact (3) de forme spéciale entre le couvercle de la marmite (2) et le bord de la marmite, de sorte que la pression de la vapeur apparaissant ne modifie pas la position de recouvrement.

7. Ensemble de cuisson commandé par un capteur selon les revendications 1, 6, caractérisé en ce que la marmite système (1) présente comme endroit de contact (25) une forme d'entonnoir.

8. Ensemble de cuisson commandé par un capteur selon les revendications 1, 6, caractérisé en ce que la marmite système (1) à l'endroit de contact (35) situé dans une petite zone circulaire du bord du couvercle (33) est placée à plat sur le bord sortant de la marmite (34).

9. Ensemble de cuisson commandé par un capteur selon les revendications 1, 6, caractérisé en ce que la marmite système (1) possède une fermeture de couvercle ronde (43), mise en place sur le bord sortant de la marmite (44).

10. Ensemble de cuisson commandé par un capteur selon la revendication 1, caractérisé en ce que la marmite système (1) possède un repère interne de niveau de remplissage (5).

11. Ensemble de cuisson commandé par un capteur selon la revendication 1, caractérisé en ce que la marmite système (1) possède une enduction externe de la paroi de la marmite, dont la couleur se modifie en fonction de la température.

12. Marmite système pour un ensemble de cuisson commandé par un capteur selon la revendication 1, comprenant un capteur à infrarouge, caractérisée en ce que le facteur d'émission est optimisé pour la marmite système (1) dans la gamme d'ondes du rayonnement infrarouge de 8 µm > > 14 µm et possède presque la valeur 1, en ce que l'appareil de cuisson comme marmite système (1) se situe dans la gamme d'épaisseurs de la paroi de la marmite de 1 à 2,4 mm, en ce que l'appareil de cuisson comme marmite système (1) respecte une gamme d'épaisseurs du fond de la marmite d'au moins 2 mm, et en ce que l'appareil de cuisson comme marmite système (1) possède un endroit de contact (25, 35, 45) porteur d'un film d'eau entre le couvercle de la marmite (22, 32, 42) et le bord de la marmite (24, 34, 44).
